Europäisches Patentamt

European Patent Office

Office européen des brevets

(11) Publication number: **0 487 222 A1**

## EUROPEAN PATENT APPLICATION

(21) Application number: **91310131.7**

(22) Date of filing: **01.11.91**

(51) Int. Cl.⁵: **C11D 7/50**, C08J 9/14, C09K 3/30

(30) Priority: **20.11.90 US 615912**

(43) Date of publication of application:
**27.05.92 Bulletin 92/22**

(84) Designated Contracting States:
**AT BE CH DE DK ES FR GB GR IT LI LU NL SE**

(71) Applicant: **E.I. DU PONT DE NEMOURS AND COMPANY**
**1007 Market Street**
**Wilmington Delaware 19898(US)**

(72) Inventor: **Merchant, Abid Nazarali**
**1408 Clive Circle**
**Wilmington, Delaware 19803(US)**

(74) Representative: **Woodcraft, David Charles et al**
**BROOKES & MARTIN High Holborn House**
**52/54 High Holborn**
**London, WC1V 6SE(GB)**

(54) Azeotropic compositions of dichloropentafluoropropane and chloroform.

(57) Azeotropic mixtures of dichloropentafluoropropanes (HCFC-225s) and chloroform useful in solvent cleaning, refrigeration/heat pump, foam blowing agent and aerosol propellant applications.

EP 0 487 222 A1

## BACKGROUND OF THE INVENTION

1. Field of the Invention

The present invention relates to binary azeotropic compositions of dichloropentafluoropropanes and chloroform and their use as refrigerants, heat pump transfer media, foam blowing agents, aerosol propellants and cleaning agents.

2. Description of Related Art

As modern electronic circuit boards evolve toward increased circuit and component densities, thorough board cleaning after soldering becomes a more important criterion. Current industrial processes for soldering electronic components to circuit boards involve coating the entire circuit side of the board with flux and thereafter passing the flux-coated board over preheaters and through molten solder. The flux cleans the conductive metal parts and promotes solder fusion. Commonly used solder fluxes generally consist of rosin, either used alone or with activating additives, such as amine hydrochlorides or oxalic acid derivatives.

After soldering, which thermally degrades part of the rosin, the flux residues are often removed from the circuit boards with an organic solvent. The requirements for such solvents are very stringent. Defluxing solvents should have the following characteristics: a low boiling point, be nonflammable, have low toxicity and have high solvency power, so that flux and flux residues can be removed without damaging the substrate being cleaned.

While boiling point, flammability and solvent power characteristics can often be adjusted by preparing solvent mixtures, these mixtures are often unsatisfactory because they fractionate to an undesirable degree during use. Such solvent mixtures also fractionate during solvent distillation, which makes it virtually impossible to recover a solvent mixture with the original composition.

On the other hand, azeotropic mixtures, with their constant boiling temperatures and constant compositions, have been found to be very useful for these applications. Azeotropic mixtures exhibit either a maximum or minimum boiling temperature and they do not fractionate on boiling. These characteristics are also important when using solvent compositions to remove solder fluxes and flux residues from printed circuit boards. Preferential evaporation of the more volatile solvent mixture components would occur, if the mixtures were not azeotropic, and would result in mixtures with changed compositions and with attendant less desirable solvency properties, such as lower rosin flux solvency and lower inertness toward the electrical components being cleaned. The azeotropic character is also desirable in vapor degreasing operations where redistilled solvent is generally employed for final rinse cleaning.

In summary, vapor defluxing and degreasing systems act as a still. Unless the solvent composition exhibits a constant boiling temperature, i.e., is a single compound or is an azeotrope, fractionation will occur and undesirable solvent distributions will result, which could detrimentally affect the safety and efficacy of the cleaning operation.

A number of chlorofluorocarbon-based azeotropic compositions have been discovered and in some cases used as solvents for solder flux and flux residue removal from printed circuit boards and also for miscellaneous degreasing applications. For example, U.S. Patent 3,903,009 discloses the ternary azeotrope of 1,1,2-trichlorotrifluoroethane with ethanol and nitromethane; U.S. Patent 2,999,815 discloses the binary azeotrope of 1,1,2-trichlorotrifluoroethane and acetone; U.S. Patent 2,999,816 discloses the binary azeotrope of 1,1,2-trichlorotrifluoroethane and methyl alcohol; U.S. Patent 2,999,817 discloses the binary azeotrope of 1,1,2-trichlorotrifluoroethane and methylene chloride; and U.S. Patent 4,767,561 discloses the ternary azeotrope of 1,1,2-trichlorotrifluoroethane, methanol and 1,2-dichloroethylene.

Such mixtures are also useful as buffing abrasive detergents, e.g., to remove buffing abrasive components from polished surfaces such as metal, as drying agents for jewelry or metal parts and as resist-developers in conventional circuit manufacturing techniques employing chlorine-type developing agents, and to strip photoresist (for example, with addition of a chlorohydrocarbon such as 1,1,1-trichloroethane or trichloroethylene). The mixtures further are useful as refrigerants, heat transfer media, gaseous dielectrics, foam expansion agents, aerosol propellants, solvents, power cycle working fluids and fire extinguishing agents. Further, in numerous cases, the halocarbon components of these mixtures each singly are effective in these applications.

Closed-cell polyurethane foams are widely used for insulation purposes in building construction and in the manufacture of energy efficient electrical appliances. In the construction industry, polyurethane (polyisocyanurate) board stock is used in roofing and siding for its insulative and load-caring capabilities.

Poured and sprayed polyurethane foams are also used in construction. Sprayed polyurethane foam are widely used in construction. Sprayed polyurethane foam are widely used for insulating large structures such as storage tanks, etc. Pour-in-place urethane foams are used, for example, in appliances such as refrigerators and freezers plus they are used in making refrigerated trucks and rail cars.

All of these various types of polyurethane foams require expansion agents (blowing agents) for their manufacture. Insulating foams depend on the use of halocarbon blowing agents, not only to foam the polymer, but primarily for their low vapor thermal conductivity, a very important characteristic for insulation value. Historically, polyurethane foams are made with CFC-11 ($CFCl_3$) as the primary blowing agent.

A second important type of insulative foam is phenolic foam. These foams, which have a very attractive flammability characteristic, are generally made with CFC-11 and CFC-113 (1,1,2-trichlorotrifluoroethane) blowing agents.

A third type of insulating foam is thermoplastic foam, primarily polystyrene foam. Polyolefin foams (polyethylene and polypropylene) are used widely in packaging. These thermoplastic foams are generally made with CFC-12.

Many refrigeration applications, e.g., refrigerators and auto air conditioners presently use CFC-12 as the refrigerant. Other refrigerant applications, e.g., industrial scale cooling processes such as large building, employ CFC-11. HFC-134a is a fluorocarbon compound identified as a potential replacement for CFC-12, having properties near those of CFC-12 and being nonflammable with a zero ozone depletion potential. However, HFC-134a has a lower refrigeration coefficient of performance than that of CFC-12, which can result in increased energy consumption for refrigerator applications if HFC-134a is substituted for CFC-12.

Many products designed for household, personal or industrial use are available as aerosol products. All such products utilize the pressure of a propellant gas or a mixture of propellant gasses (i.e., a propellant gas system) to expel the active ingredients from the container. For this purpose, most aerosols employ liquefied gases which vaporize and provide the pressure to propel the active ingredients when the valve on the container is pressed open. The propellant system of the present invention can be combined with conventional volatile adjuvants to achieve mixtures with such vapor pressures, in a manner known in the art.

Some of the chlorofluorocarbons which are currently used for cleaning and other applications have been theoretically linked to depletion of the earth's ozone layer. As early as the mid-1970s, it was known that introduction of hydrogen into the chemical structure of previously fully-halogenated chlorofluorocarbons reduced the chemical stability of these compounds. Hence, these now destabilized compounds would be expected to degrade in the lower atmosphere and not reach the stratospheric ozone layer intact. What is also needed, therefore, are substitute chlorofluorocarbons which have low theoretical ozone depletion potentials.

In view of the above, there is a constant effort in the art to discover new azeotropic compositions which have desirable solvency characteristics and particularly greater versatilities in solvency power.

SUMMARY OF THE INVENTION

According to the present invention, azeotropic compositions have been discovered comprising admixtures of effective amounts of dichloropentafluoropropane and chloroform. More specifically, but not by way of limitation as explained later, the azeotropic compositions are an admixture consisting essentially of from 60 to 90 (preferably 70 to 85) weight percent dichloropentafluoropropane and from 40 to 10 (preferably 30 to 15) weight percent chloroform. Thus the present invention provides an azeotropic composition consisting essentially of effective amounts of: dichloropentafluoropropane and chloroform to achieve a binary azeotrope.

It is an object of the present invention to provide nonflammable azeotropic compositions of reduced ozone depletion and global warming potential which are well suited for solvent cleaning applications as well as being useful as vapor compression refrigeration and heat pump applications, aerosol propellant application, and foam blowing agent applications.

DESCRIPTION OF THE PREFERRED EMBODIMENTS

The compositions of the instant invention comprise admixtures of effective amounts of dichloropentafluoropropane ($C_3HCl_2F_5$, boiling point approximately equal to 53°C) and chloroform ($CHCl_3$, boiling point = 61.2°C) to form azeotropic compositions. These specific halocarbons are also referred to herein as HCFC-225 and HCC-20, respectively, consistent With conventional ASRE nomenclature. It should be appreciated that term dichloropentafluoropropane, for purposes of this invention, refers to one or more of the HCFC-225 isomers that exhibit, either individually or in combination, azeotropic formation when combined with chloroform, including by way of example but not limited thereto,
1-hydro-1,1-dichloropentafluoropropane (HCFC-225ca),
1-hydro-2,3-dichloropentafluoropropane (HCFC-225bb),
1-hydro-1,2-dichloropentafluoropropane (HCFC-225ba),
1-hydro-2,2-dichloropentafluoropropane (HCFC-225aa),
1-hydro-1,3-dichloropentafluoropropane (HCFC-225cb),
and 2-hydro-1,2-dichloropentafluoropropane, (HCFC-225da). It should be further appreciated that the discovery of a true binary azeotrope involving a mixture of HCFC-225 isomers with chloroform along with confirmation of true binary azeotropes of the individual isomers making up this mixture with chloroform, all at differing relative compositions and boiling temperatures, inherently establishes a continuum or continuous envelope of azeotrope compositions covering a range of compositions and respective boiling temperatures. Thus, the previously identified boiling temperature for the mixture of isomers plus chloroform azeotrope in a broader sense has been found to be a range of temperatures roughly covering the range of individual boiling points of the pure isomers (i.e., from about 50.4°C to about 56.3°C) while the true binary compositional range corresponds to the previously recited 60 to 90 wt. % HCFC-225 broadly and more typically 70 to 85 wt. & HCFC-225. In other words, the true binary azeotrope compositions according to the instant invention vary according to the relative amount of individual isomers present.

By azeotropic composition is meant, a constant boiling liquid admixture of two or more substances, whose admixture behaves as a single substance, in that the vapor produced by partial evaporation or distillation of the liquid has substantially the same composition as the liquid from which it evaporated or distilled or has, in principle, substantially the same composition of the liquid phase formed by isothermally condensing or refluxing the vapor, i.e., the admixture distills/refluxes without substantial compositional change. It should be appreciated, for purposes of this invention, that the phrase azeotropic composition is intended to include admixtures optionally containing other components which when the admixtures are heated such as to boil or evaporate they produce a vapor phase whose composition is that of an azeotrope. Thus, when subsequent condensation of this vapor phase and return of the condensate to the liquid admixture takes place, the benefits associated with replenishing the azeotropic composition wish substantially a constant composition is achieved, independent of the presence of the other components. Constant boiling compositions, which are characterized as azeotropic, exhibit either a maximum or minimum boiling temperature, as compared with that of the nonazeotropic mixtures of the same substances.

For purposes of this invention, effective amount is defined as the amount of each component of the instant invention admixture which, when combined, results in the formation of an azeotropic composition of the instant invention. This definition includes the amounts of each component, which amounts may vary depending upon the pressure applied to the composition so long as the azeotropic compositions continue to exist at the different pressures, but with possible different boiling temperature. Therefore, effective amount includes each components, weight percentage for each composition of the instant invention, which form azeotropic compositions at pressures other than atmospheric pressure.

The language "an azeotropic composition consisting essentially of..." is not intended to exclude the inclusion of other materials and components which do not significantly alter the azeotropic character of the composition consistent with the above definition of azeotropic composition.

It is possible to characterize, in effect, a constant boiling admixture, which may appear under many guises, depending upon the conditions chosen, by any of several criteria:

* The composition can be defined as an azeotrope of A and B since the very term "azeotrope" is at once both definitive and limitative (where as in this particular case one of the components can be a mixture of one or more isomers), and requires that effective amount of A and B form this unique composition of matter, which is a constant boiling admixture.

* It is well known by those skilled in the art that at different pressures, the composition of a given azeotrope will vary - at least to some degree - and changes in pressure will also change - at least to some degree - the temperature at which boiling will occur. Thus an azeotrope of A and B represents a unique type of relationship but with a variable composition which depends on temperature and/or pressure. Therefore, compositional ranges, rather than fixed compositions, are often used to define azeotropes.

* The composition can be defined as a particular weight percent relationship or mole percent relationship of A and B, while recognizing that such specific values point out only one particular such relationship and that in actuality, a series of such relationships, represented by A and actually exist for a given azeotrope, varied by the influence of pressure.

* Azeotrope A and B can be characterized by defining the composition as an azeotrope characterized by a boiling temperature at a given pressure, thus giving identifying characteristics without unduly

4

limiting the scope of the invention by a specific numerical composition, which is limited by and is only as accurate as the analytical equipment available.

It should be further understood that when specifying, defining and claiming the azeotrope by reciting one or more intensive properties, particularly a colligative property, such property may be influenced by the presence of a diluent or solute without significantly altering the advantages of being an azeotrope. In view of this and consistent with the above definition of azeotropic composition encompassing admixtures that produce the azeotrope in the vapor phase, the meaning of "consisting essentially of" shall, for purposes of the present invention, embrace compositions that would produce the vapor phase azeotrope upon evaporation, distillation and/or refluxing.

Binary mixtures of 70 to 85 weight percent dichloropentafluoropropane and 30 to 15 weight percent chloroform are characterized as azeotropes or azeotropic compositions in that the mixtures with relative amounts of HCFC-225 and HCC-20 within this range exhibit substantial constant boiling compositions. Being a substantially constant boiling composition, the individual components of the mixture do not tend to fractionate to any great extent upon evaporation or boiling. After evaporation, only a small difference exists between the composition of the vapor and the composition of the condensate produced by cooling the vapor phase. This difference is such that the compositions of the vapor and liquid phase condensate are considered substantially identical. Accordingly, any mixture with relative amounts of HCFC-225 and HCC-20 within this range exhibits properties upon vaporizing, distilling or refluxing which are characteristic of a true binary azeotrope. The binary composition consisting of about 79.8 weight percent of a mixture of HCFC-225 isomers and 20.2 weight percent chloroform has been established within the accuracy of the fractional distillation method, as a true binary azeotrope, boiling at about 51.2°C and substantially atmospheric pressure, while individual isomer HCFC-225cb and HCFC-225ca at 71.5 wt. % and 83.6 wt. % with chloroform are established as true binary azeotropes boiling at 53.9 and 50.9°C, respectively. These are the preferred azeotropic compositions of the instant invention.

The aforesaid azeotropes have a low ozone-depletion potential and are expected to decompose almost completely prior to reaching the stratosphere.

The azeotropic composition of the instant invention permit easy recovery and reuse of the solvents from vapor defluxing and degreasing operations because of their azeotropic nature. As an example, the azeotropic mixtures of this invention can be used in cleaning processes such as described in U.S. Patent 3,881,949, or as a buffing abrasive detergent or drying agent for jewelry or metal.

In addition, the mixtures are useful as resist developer, where chlorine-type developers are used, and as resist stripping agents with the addition of appropriate halocarbons.

Another aspect of the invention is a refrigeration method which comprises condensing the azeotropic composition and thereafter evaporating it in the vicinity of a body to be cooled. Similarly, still another aspect of the invention is a method for heating which comprises condensing the invention refrigerant in the vicinity of a body to be heated thereafter evaporating the refrigerant. A further aspect of the invention includes aerosol compositions comprising an active agent and a propellant, wherein the propellant is the azeotropic mixture of the invention; and the production of these compositions by combining said ingredients. The invention further comprises a cleaning solvent composition comprising the azeotropic mixtures of the invention.

The azeotropic compositions of the instant invention can be prepared by any convenient method including mixing or combining the desired component amounts. A preferred method is to weigh the desired component amounts and thereafter combine them in an appropriate container.

The following examples are presented to further illustrate specific embodiments of the present invention. Unless otherwise stated, all percentages are by weight.

EXAMPLE 1

A solution which contained 80.0 weight percent dichloropentafluoropropane (having gas chromatographic isomer distribution percentages as follows: 43.2% HCFC-225cb, $CHClFCF_2ClF_2$; 51.8% HCFC-225ca, $CF_3CF_2CHCl_2$; and 5.0% HCFC-225aa, $CHF_2CCl_2CF_3$) and 20.0 weight percent chloroform, $CHCl_3$, was prepared in a suitable container and was thoroughly mixed. The resulting solution was distilled in a Perkin-Elmer model 251 Autoannular Spinning Band Still (200 plate fractionating capability) using about a 10:1 reflux to take-off ratio. Head and pot temperatures were read directly to 0.1°C. All temperatures were adjusted to 760 mm pressure. Distillate compositions were determined by gas chromatography. The resulting data are summarized in Table I.

TABLE I

| Distillation of: (80.0 + 20.0) Dichloropentafluoropropane and Chloroform | | | | | |
|---|---|---|---|---|---|
| Cut | Pot Temp °C | Head Temp °C | Sample Recovered | HCFC -225% | Chloroform % |
| Pre | 25.1 | 50.2 | 6.2 | 78.7 | 21.3 |
| 1 | 25.3 | 50.9 | 14.5 | 80.5 | 19.5 |
| 2 | 25.5 | 51.0 | 22.7 | 79.7 | 20.3 |
| 3 | 25.7 | 51.2 | 31.5 | 79.8 | 20.2 |
| 4 | 25.9 | 51.2 | 39.9 | 80.0 | 20.0 |
| 5 | 26.2 | 51.4 | 50.7 | 79.4 | 20.6 |
| 6 | 26.3 | 51.5 | 59.8 | 79.4 | 20.6 |
| Heel | -- | -- | 89.1 | 78.1 | 21.9 |

Analysis of the data indicates very small differences exist between temperatures and distillate compositions, as the distillation progresses. A statistical analysis of the data treating the dichloropentafluoropropane and chloroform as a true binary azeotrope indicates that the azeotrope has the following characteristics at atmospheric pressure (99 percent confidence limits):

| Dichloropentafluoropropane | 79.8 ± 0.5 wt. % |
|---|---|
| Chloroform | 20.2 ± 0.5 wt.% |
| Boiling Temperature | 51.2 ± 0.2 °C |

EXAMPLE 2

In a manner analogous to the previous Example 1, 102.5 grams of a solution containing 70% dichlorpentafluoropropane, HCFC-225cb ($CHClFCF_2ClF_2$) and 30% chloroform was prepared and subjected to distillation at a pressure of 771.7 mm Hg and a reflux ratio of 15 to 1. The gas chromatography of the overhead vapor was performed using a Krytox column at the following conditions (100°C-200°C @ 10°C/min, 1.0 min = I.T.). The resulting data are presented in Table II.

TABLE II

| Distillation of: (70.0 + 30.0) Dichloropentafluoropropane and Chloroform | | | | |
|---|---|---|---|---|
| Cut | Head Temp °C | Sample Wt | HCFC -225% | Chloroform % |
| Pre | 53.8 | 10.715 | 72.0 | 28.0 |
| 1 | 53.9 | 9.250 | 71.8 | 28.2 |
| 2 | 53.9 | 11.523 | 71.4 | 28.4 |
| 3 | 53.9 | 8.777 | 71.5 | 28.5 |
| 4 | 52.9 | 8.386 | 71.2 | 28.8 |
| 5 | 53.9 | 10.710 | 71.2 | 28.8 |
| 6 | 53.9 | 10.392 | 71.2 | 28.8 |
| Heel | | 22.421 | 64.6 | 35.4 |

A statistical analysis of the data indicates that the true binary azeotrope of HCFC-225cb and chloroform has the following characteristics at atmospheric pressure (99 percent confidence limits):

| Dichloropentafluoropropane | 71.5 ± 1.0 wt. % |
|---|---|
| Chloroform | 28.5 ± 1.0 wt.% |
| Boiling Temperature | 53.9 ± 0.1 °C |

EXAMPLE 3

In a manner analogous to Examples 1 and 2, 105.4 grams of a 70% dichloropentafluoropropane, HCFC-225ca ($CF_3CF_2CHCl_2$) and 30% chloroform solution were distilled at 760.5 mm Hg and a reflux ratio of 20 to 1. The resulting data are presented in Table III.

TABLE III

| Distillation of: (70.0 + 30.0) Dichloropentafluoropropane and Chloroform | | | | |
|---|---|---|---|---|
| Cut | Head Temp °C | Sample Wt | HCFC -225% | Chloroform % |
| Pre | 50.9 | 10.855 | 86.05 | 13.95 |
| 1 | 50.9 | 8.558 | 85.42 | 14.58 |
| 2 | 50.9 | 8.188 | 85.75 | 14.42 |
| 3 | 50.9 | 8.192 | 85.57 | 14.43 |
| 4 | 51.0 | 10.202 | 84.72 | 15.28 |
| 5 | 51.2 | 9.521 | 85.73 | 14.27 |
| 6 | 51.1 | 9.547 | 82.97 | 17.03 |
| 7 | 51.2 | 7.178 | 79.38 | 20.62 |
| Heel | | 24.545 | 35.70 | 64.30 |

A statistical analysis of the data indicates that the true binary azeotrope of HCFC-225ca and chloroform has the following characteristics at atmospheric pressure (99 percent confidence limits):

| | |
|---|---|
| Dichloropentafluoropropane | 83.6 ± 2.2 wt. % |
| Chloroform | 16.4 ± 2.2 wt.% |
| Boiling Temperature | 50.9 ± 0.1 °C |

EXAMPLE 4

In order to demonstrate vapor degreasing and solvent cleaning characteristics of the azeotropic compositions, several single sided circuit boards were coated with activated rosin flux and soldered by passing the boards over a preheater, to obtain top side board temperatures of approximately 2000°F (930°C), and then through 5000°F (2600°C) molten solder. The soldered boards were defluxed individually, with the azeotropic mixture cited in Example 1 above, by suspending a circuit board first for three minutes in the boiling sump, which contains the azeotropic mixture.

Having thus described and exemplified the invention with a certain degree of particularity, it should be appreciated that the following claims are not to be so limited but are to be afforded a scope commensurate with the wording of each element of the claim and equivalents thereof.

**Claims**

1. An azeotropic composition consisting essentially of effective amounts of: dichlorpentafluoropropane and chloroform to achieve a binary azeotrope.

2. An azeotropic composition consisting essentially of from about 70 to about 85 weight percent of dichloropentafluoropropane and from about 30 to about 15 weight percent chloroform and characterized as boiling from about 50°C to about 56°C at substantially atmospheric pressure.

3. An azeotropic composition of Claim 1 wherein the composition consists essentially of about 79.8 weight percent dichloropentafluoropropane characterized by an isomer distribution of about 43.2 % HCFC-225cb, 51.8 % HCFC-225ca and 5.0 % HCFC-225aa and about 20.2 weight percent chloroform and wherein the azeotrope is characterized as boiling at about 51.2°C at substantially atmospheric pressure.

4. An azeotropic composition of Claim 1 wherein the composition consists essentially of about 71.5 weight percent HCFC-225cb and about 28.5 weight percent chloroform and wherein the azeotrope is characterized as boiling at about 53.9°C at substantially atmospheric pressure.

5. An azeotropic composition of Claim 1 wherein the composition consists essentially of about 83.6 weight percent HCFC-225ca and about 16.4 weight percent chloroform and wherein the azeotrope is characterized as boiling at about 50.9ºC at substantially atmospheric pressure.

6. A process for cleaning a surface which comprises contacting said surface with the azeotropic composition of claims 1, 2, 3, 4 or 5.

7. A process for manufacturing a polymer foam which comprises expanding a polymer with a blowing agent comprising the azeotropic composition of claims 1, 2, 3, 4 or 5.

8. A process for producing refrigeration which comprises evaporating the azeotropic composition of claims 1, 2, 3, 4 or 5.

9. A process for producing heat which comprises condensing the azeotropic composition of claims 1, 2, 3, 4 or 5.

10. A process for producing an aerosol characterised by the use of the azeotropic composition of claims 1, 2, 3, 4 or 5 as the propellant.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | WORLD PATENTS INDEX LATEST<br>Derwent Publications Ltd., London, GB;<br>AN 90264870<br>& JP-A-2 185 600 (ASAHI GLASS CO.) 19 July 1990<br>* abstract *<br>--- | 1,2,5-9 | C11D7/50<br>C08J9/14<br>C09K3/30 |
| P,X | WORLD PATENTS INDEX LATEST<br>Derwent Publications Ltd., London, GB;<br>AN 91270895<br>& JP-A-3 178 937 (ASAHI GLASS CO.) 2 August 1991<br>* abstract *<br>--- | 1-6 | |
| P,X | EP-A-0 450 854 (ICI)<br>* page 1, line 29 - page 2, line 15; claims 1-7,14 *<br>----- | 1,6 | |

| | TECHNICAL FIELDS SEARCHED (Int. Cl.5) |
|---|---|
| | C11D<br>C08J<br>C09K |

The present search report has been drawn up for all claims

| Place of search | Date of completion of the search | Examiner |
|---|---|---|
| THE HAGUE | 20 FEBRUARY 1992 | GRITTERN A.G. |

EPO FORM 1503 03.82 (P0401)